# EUROPEAN PATENT APPLICATION

(11) **EP 3 035 207 A1**
(43) Date of publication of application: **22.06.2016**
(21) Application number: 14307033.2
(22) Date of filing: 15.12.2014
(51) Int. Cl.: G06F 17/27, G06F 17/28, G10L 15/00

(54) **Speech translation device**

(71) Applicant: Laboratories Thomson Ltd., 8048 Zürich (CH)
(72) Inventor: Magdy, Megeid, 8047 Zuerich (CH); Severin, Engeli, 9100 Herisau (CH)
(74) Representative: Lindemann, Robert

(57) **Abstract**

A speech translation device comprises a user input interface for transforming a first user's input into digital input text, a translation engine for translating said digital input text from a source language into digital output text in a target language, and a user output interface for making said digital output text perceivable by a second user. The speech translation device further comprises a wireless interface for collecting information about its current environment, based on which language identification is used to choose one of said source and target languages..

## Description

### FIELD

The present invention relates to speech translation, notably to a portable speech translation device.

### BACKGROUND

The internet has provided people with unprecedented possibilities for communication between individuals all over the world, and machine translation devices have been developed in order to help overcome language barriers. Initially, such devices were used for translating written text only, or, to be precise, digital text in which each letter of an alphabet is represented by a specific binary datum having a predetermined, small number of bits.

More recently, speech translation devices have been proposed for translating from and into oral speech. One such device announced by Skype (http://www.skype.com/en/translator-preview/) will provide real-time translations of telephone conversations and a written transcript, based on which a user can verify whether his speech has been understood properly by the device.

When a person makes a telephone call, he or she usually knows whom he or she is calling and which language the called person speaks, so that the caller's and the called person's languages can be set as source and target languages for translation when the call is established.

When a person is travelling abroad, situations may arise where the person needs to address a stranger but cannot do so because he does not know what language the stranger speaks, or the stranger's language is not an expected one. Such a situation can arise easily e.g. in countries of Latin America, Africa or in India, where the official language or at least one of them is of European origin, but large parts of the local population use non-European languages among themselves. It might also happen e.g. in Switzerland, if e.g. an English speaker inadvertently crosses the language border between German- and French-speaking regions, or in Spain, where people may insist on using their native Basque or Catalan tongues instead of Castilian because of their political conviction.

A speech translation device which enables its user to address and communicate with a complete stranger should be capable of handling this problem.

### SUMMARY

The present speech translation device comprises a user input interface that transforms a first user's speech input into digital input text, a translation engine that translates said digital input text from a source language into digital output text in a target language, and a user output interface that makes said digital output text perceivable by a second user. The present device further comprises a wireless interface for collecting information about its current environment based upon which information one of said source and target languages is chosen.

According to a first embodiment, the wireless interface comprises inter alia a receiver for navigation signals originating from satellites such as the GPS, Glonass or Galileo satellites, by which the geographic location of the device can be determined.

Once the location of the device is known, the language or languages usually spoken at that location can be determined straightforwardly by accessing a database. The database may be stored locally in the device itself, or a wireless interface may be used for accessing a remote database, which may be made accessible by the manufacturer of the machine translation device, e.g. via Internet. In such a database, language borders within a country, e.g. between French-, Flemish- and German speaking regions in Belgium, or even within a city, e.g. between Chinese-, Spanish- and English-speaking quarters of a city or between townships of different ethnical origin, may be recorded.

According to a second embodiment, which may be combined with the first embodiment described above, the wireless interface may comprise a receiver for wireless network signatures and is adapted to conclude upon the geographic location of the device based on signatures received. Databases from which the geographic location of a WiFi hotspot can be retrieved based on its signature are publicly available, e.g. at http://www.openwlanmap.org. Here, too, a language can be assigned to the geographic location using a database as described above.

Alternatively, the wireless interface may be adapted to retrieve internet content associated to a given geographic location, to identify a language of said internet content and to choose the language thus identified as said one of said source and target languages. Since the internet content is available in a written form - in the broad sense defined at the beginning of this description - words of this content are straightforward to identify and to compare with dictionaries of various languages, so that a reasonable assumption about the language is easy to make.

The internet content may be found by different strategies, depending on the way in which it is associated to the location. One way would be to search for internet pages whose proprietors are based close to the location, another would be to investigate captions of photographs taken in the vicinity of the location and published in Google Earth, etc.

A different approach is possible in an environment where several machine translation devices according to the invention are present. In such a device, its user will set his preferred language as one language from which and into which to translate. Therefore, if the wireless interface of the machine translation device is adapted to request from a second machine translation device information about at least one of the source and target languages set in said second machine translation device, the devices will be set to appropriate languages if their users start talking with each other.

Text-to-speech converters need a dictionary of the language to be converted in order to discern individual words in recorded speech and to judge the reliability of recognition, and if the language is not known a priori, it must be guessed, and after an attempt to recognize words of said language in the recorded speech, it must be judged whether the reliability of recognition is sufficient to assume that the guess was correct, or whether an attempt should be made assuming another language. Such a process takes a long time, and since several recordings may be necessary before the language is identified and communication becomes possible, it is likely that in the meantime the persons involved will give up their attempt to communicate. Therefore, if the input interface comprises a speech-to-text converter, and if the language that is chosen based on the information obtained by the wireless interface is the source language, said text-to-speech converter accesses a dictionary of the chosen language for speech-to-text conversion.

On the other hand, if the output interface comprises a text-to-speech converter, and if the chosen language is the target language, said text-to-speech converter accesses a dictionary of the chosen language for text-to-speech conversion.

In an embodiment the device has an interface by which a user can set his or her preferred language as the other of said source and target languages.

In an embodiment the output interface comprises at least one display screen for outputting at least one of said digital input text and said digital output text. Outputting the digital input text allows a user to check whether his speech has been correctly understood and can be translated correctly or if there is a misunderstanding which is bound to produce a misleading translation. Outputting the digital output text may help the listener to understand the translation in particular in case of linguistic deficiencies which the state of the art in machine translation is not yet able to avoid.

Voice recognition means may be provided for assigning input speech to one of a plurality of speakers and for selecting said source and target languages depending on the speaker. With the help of these means, various speakers can address the device using different source languages and have their speech translated into the correct target language without having to manipulate a user interface of the device.

If the device has said voice recognition means and the display screen mentioned above, a specific output template, such as a letter colour, left justified or right justified typesetting, may be associated to each user for outputting text on said display screen, so that a reader can tell from the templates who said what.

A specific voice associated to each user for outputting a translation of said user's speech by the text-to-speech converter can help users understand a translation of a discussion.

A method of operating a machine translation device comprises collecting information about the current environment of the device by one or more wireless interfaces, and choosing one of the source and target languages for translation based on the information collected. A computer program product comprises program code means which, when executed on a computer, cause the computer to operate as the machine translation device described above and/or to carry out the above-described method.

### BRIEF DESCRIPTION OF DRAWINGS

Further features and advantages of the invention will become apparent from the subsequent description of embodiments thereof referring to the appended drawings, in which
- Fig. 1: is a perspective view of a machine translation device according to a first embodiment of the invention;
- Fig. 2: is a block diagram of the machine translation device and
- Fig. 3: is a flowchart of a language selection method carried out by the machine translation device;
- Fig. 4: is a screenshot of the display of the device of Fig. 1; and
- Fig. 5: is a perspective view of a machine translation device according to a further embodiment.

### DESCRIPTION OF EMBODIMENTS

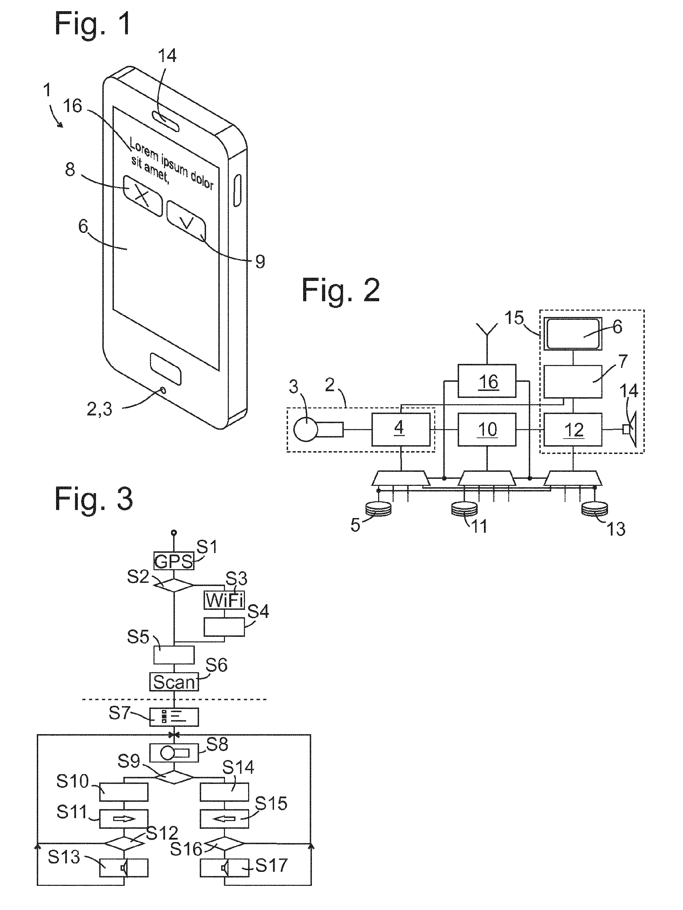

Fig. 1 illustrates a machine translation device 1 according to a first embodiment of the invention. The outward appearance of the device is similar to a Smartphone, and it may in fact be implemented by way of software executed on a Smartphone, a tablet PC or the like. A user input interface 2 comprises a microphone 3 and a digital signal processor 4 (cf. Fig. 2) which receives recorded speech from microphone 3.

The digital signal processor 4 comprises spectral analysis means which enable it to distinguish at least between its user's speech and that of a third person based on spectral features independent of the language spoken.

A phonetic dictionary 5 of the user's language is preferably stored permanently within device 1 and is accessed by digital signal processor 4 when analyzing the user's speech and converting it into digital text.

The digital text is output to a touchscreen display 6 of the device 1 via controller 7. Controller 7 displays the text 8 and may further display softkeys 8, 9 which can be operated by a user. Using these keys, the user may either approve of the text, if the words in it were recognized correctly, or reject it and speak again.

At the same time the digital text is forwarded to a translation engine 10 which accesses a bilingual dictionary 11 for translating it into a target language. The translation into the target language may also be output to controller 7 for displaying on display 6, so that it can be read by the user's dialog partner. It is also output to digital signal processor 12 which uses a phonetic dictionary 13 to convert it into an audio signal which is then output by speaker 14.

Speaker 14, its digital signal processor 13, the display 6 and its controller 7 may be regarded as a user output interface 15.

Bilingual dictionary 11 and phonetic dictionary 13 are selected in accordance with information obtained through wireless interface 16. Dictionaries 11 and 13 may be stored remotely and may be accessed by translation engine 10 and digital signal processor 12 via a cellular network or mobile internet connection provided by wireless interface 16. Alternatively, if the user expects to use the device 1 in a place with limited mobile network access, dictionaries which are likely to be needed may be downloaded through wireless interface 16 and stored in device 1.

In order to provide a connection to appropriate dictionaries or to download them, the device is adapted to judge which languages are spoken in the environment of device 1, e.g. based on data and/or information obtained through wireless interface 16.

To this end, according to a first embodiment, wireless interface 16 comprises a GPS receiver, as most Smartphones have, and by which it detects the geographic location of the device 1 in step S1 of the flowchart of Fig. 3. If the detection fails because the device 1 is in a building where no GPS signal is available, it is likely that some Wi-Fi signal will be available, the signature of which is detected in step S3. In step 4 the signature is input into a database which returns the geographic location of the Wi-Fi network.

Based on the location established in step S1 or S4, interface 16 consults a second database in step S5 which returns one or more languages likely to be spoken at that location.

Alternatively, if no such database is available, wireless interface 16 may search the internet for content related to the geographic location, extract words from this content and match these to dictionaries of various languages, based on the assumption that content related to the location is likely to be in a language spoken there.

Additionally, wireless interface 16 may perform a scan S6 for radio signals from other machine translation devices of the same or a compatible type. If such devices exist, they communicate to each other their respective source and/or target languages.

In this way, a list of languages is obtained which potential dialog partners of the owner of device 1 are likely to speak. Such a list can be established while the device 1 is in a standby mode, so that it is instantly available when the user wants to use the device.

If not already stored in the device 1, bilingual dictionaries for the user's language and the languages of the list and phonemic dictionaries for these languages may be downloaded at that time.

If the user switches the device from standby to active mode and there is more than one language in this list, it is displayed on display 6 along with a list of softkeys for language selection in step S7. Here the user's dialog partner can select his language, or the user may conjecture based on the dialog partner's appearance which of the languages offered he is most likely to speak. If no selection is made, the device 1 chooses the most likely language from the list.

In the next step S8, the device 1 listens for speech. If speech is recorded by microphone 3, digital signal processor 4 compares its spectral pattern to the user's (S9) and, if the patterns fit, converts it into digital text using the phonetic dictionary 5 of the user's language (S10). The digital text is displayed on display 6 and translated by translation engine 10 (S11). If the user rejects the displayed text (S12), processing returns to step S8, if he or she approves, the translated text is displayed on display 6 and is passed on to digital signal processor 12 for conversion into speech and output by speaker 13 (S13). Then processing returns to step S8, waiting for further input.

If more speech is recorded in step S8 and its spectral features do not match the user's in step S9, it can be assumed that the speaker is the user's dialog partner. Digital signal processor 4 carries out speech to text conversion using phonetic dictionary 13 in step S14, and translation engine 10 translates into the user's language (S15). Here, too, the untranslated text may be displayed for the speaker to see and to approve or reject (S16), and if approved, translated speech is output in step S17.

When converting the dialog partner's speech to text, digital signal processor 4 may judge the quality of matching between words of dictionary 13 and words identified in the speech. If the degree of matching is critically low, it is likely that the dialog partner's language is not that of dictionary 13; in that case the device 1 may suggest to the user to choose another language, or it may check with the phonetic dictionaries 13 of the other languages of the list whether a better match can be obtained and, if so, switch to the better-fitting language automatically.

According to a preferred embodiment, the digital signal processor 4 keeps a file not only of spectral features of the device user's voice but also of his dialog partners. The latter file may be temporary, for use only within a single dialog. It enables the device to discern not only between its user's voice and a dialog partner, but also to tell different dialog partners apart. So, if a third person's voice is recorded, it can either be ignored, thus avoiding a waste of processing power on a translation attempt which is likely to be fruitless, or, if the third person is admitted into the discussion, the digital signal processor 4 can judge, by matching the third person's speech with the dictionaries 5, 13, which the language of the third person is and translate it into the respective other one.

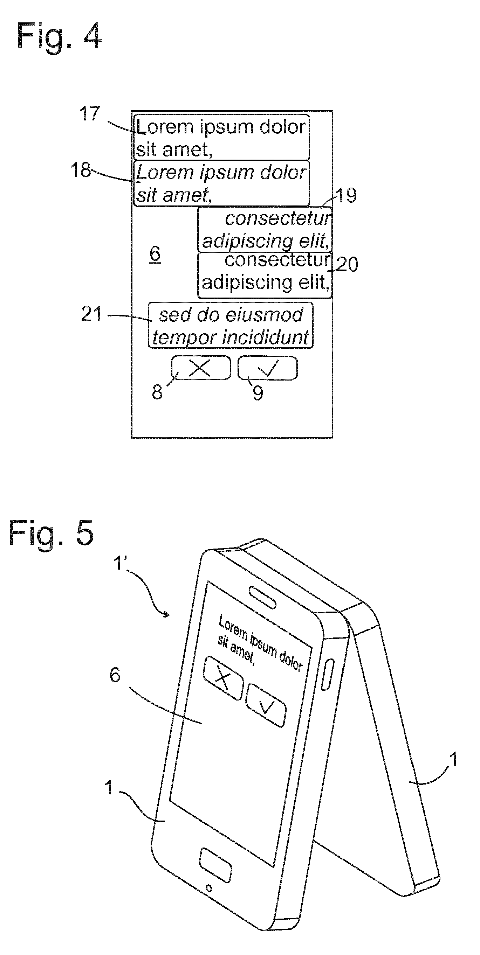

Fig. 4 is a view of display 6 after some time of discussion. A first text block 17 is the user's speech in his original language, a second text block 18 is the translation thereof. Both text blocks are left justified, the left side of the display 6 being associated to the user. The right side is associated to the dialog partner, therefore a third block 19 representing the dialog partner's speech in the original language, and a fourth block 20 representing its translation into the user's language are right justified. The two languages may have a specific font or colour associated to them; here, the user's language is represented in standard type, whereas the dialog partner's language is in italics. A third person's speech is represented in centered block 21; from the fact that it is in italics, one can tell that the third person speaks the same language as the dialog partner.

Since in this case the digital output processor 12 generates translated speech of at least two speakers in a same language, information about the identity of the speaker is passed on from processor 4 to processor 12, thus enabling processor 12 to assign a specific voice to each speaker when outputting a translation.

Fig. 5 is a perspective view of a machine translation device 1' according to a further embodiment of the invention. The device 1' may be formed by temporarily joining two devices 1 of the type shown in Fig. 1; the devices may have magnets or mechanical connectors at their rear sides by which they can be temporarily connected in the configuration shown, with their displays facing their respective users, who may be seated at a table on which device 1' rests. When connected as shown, the two devices 1 will communicate by their respective wireless interfaces 16, notifying each other of their respective user's languages, and enter a co-operative mode of operation in which each device 1 processes only its user's speech, since the user's voice will usually be the one which the digital signal processor 4 is best trained to recognize, displays the untranslated user's speech on its display and sends the translation thereof to the other device to be displayed there and to be output as speech. So each user finds text only in his language on the display 6 facing him, and only speech in his language is output from the speaker facing him.

Of course, the device 1' may also be formed by two members which are permanently connected, e.g. by a hinge, or by a two-sided device having microphones, speakers and displays on opposite-facing sides. In that case, just as in the embodiment of Fig. 1, the device comprises one translation engine 10 and its associated digital signal processors for speech-to-text and text-to-speech conversion, the main difference being that there are two displays 6 on which text in different languages is output.

It should be kept in mind that the above distinction between digital signal processors, translation engine and wireless interface refers to function, but not necessarily to hardware, and that all of these items can be implemented by software and two or more of them can be executed by a same processor.

### REFERENCE SIGNS LIST

- 1,1': machine translation device
- 2: user input interface
- 3: microphone
- 4: digital signal processor
- 5: phonetic dictionary
- 6: display
- 7: controller
- 8: softkey
- 9: softkey
- 10: translation engine
- 11: bilingual dictionary
- 12: digital signal processor
- 13: phonetic dictionary
- 14: speaker
- 15: user output interface
- 16: wireless interface
- 17: text block
- 18: text block
- 19: text block
- 20: text block
- 21: text block

## Claims

1. A speech translation device (1, 1') comprising a user input interface (2) adapted to transform a first user's input into digital input text, a translation engine (10) adapted to translate said digital input text from a source language into digital output text in a target language, and a user output interface (15) adapted to make said digital output text perceivable by a second user, **characterized in that** the speech translation device (1, 1') further comprises a wireless interface (16) adapted to collect information about its current environment, wherein the collected information is used for choosing one of said source and target languages.

2. The speech translation device of claim 1, wherein the wireless interface (16) comprises a receiver for satellite navigation signals and the collected information relates to the geographic location of the device.

3. The speech translation device of claim 1, wherein the wireless interface (16) comprises a receiver for wireless network signatures and is adapted to conclude upon the geographic location of the device (1, 1') based on signatures received (S3, S4).

4. The speech translation device of any of the preceding claims, wherein the device is adapted to consult (S5) a database which assigns at least one local language to a given geographic location, via wireless interface (16).

5. The speech translation device of any of the preceding claims, wherein the device is adapted to retrieve, via wireless interface (16), internet content associated to a given geographic location, to identify a language of said internet content and to propose the language thus identified as said one of said source and target languages.

6. The speech translation device of any of the preceding claims, wherein the device is adapted to request (S6), via wireless interface (16), from a second machine translation device information about at least one of the source and target languages set in said second machine translation device.

7. The speech translation device of any of the preceding claims, wherein the input interface (2) comprises a speech-to-text converter (4), and if the chosen language is the source language, said converter (4) uses a dictionary (13) of the chosen language for speech-to-text conversion.

8. The speech translation device of any of the preceding claims, wherein the output interface (15) comprises a text-to-speech converter (12), and if the chosen language is the target language, said text-to-speech converter accesses a dictionary (13) of the chosen language for text-to-speech conversion.

9. The speech translation device of any of the preceding claims, wherein the other of said source and target languages is pre-set by a user.

10. The speech translation device of any of the preceding claims, wherein the output interface (15) comprises at least one display screen (6) for outputting at least one of said digital input text (17, 19) and said digital output text (18, 20).

11. The speech translation device of any of the preceding claims, wherein the user input interface (2) comprises voice recognition means for assigning input speech to one of a plurality of speakers and for selecting said source and target languages depending on the speaker.

12. The speech translation device of claim 11 and claim 10, wherein a specific output template is associated to each user for outputting text on said display screen (6).

13. The speech translation device of claim 11 and claim 10, wherein in the text-to-speech converter (12) a specific voice is associated to each user for outputting a translation of said user's speech.

14. A method of operating a speech translation device comprising
- collecting information about the current environment of the device by a wireless interface; and
- choosing one of the source and target languages for translation based on the information collected.

15. A computer program product comprising program code which, when executed on a computer, cause the computer to operate as the speech translation device of any of claims 1 to 13 or to carry out the method of claim 14.
